Europäisches Patentamt

European Patent Office

Office européen des brevets

(11) Publication number: **0 327 366**
**A2**

# EUROPEAN PATENT APPLICATION

(21) Application number: **89301013.2**

(22) Date of filing: **02.02.89**

(51) Int. Cl.⁴: **H 01 M 2/34**

(30) Priority: **04.02.88 GB 8802464**

(43) Date of publication of application:
**09.08.89 Bulletin 89/32**

(84) Designated Contracting States:
**BE CH DE ES FR GB IT LI NL SE**

(71) Applicant: **British Ever Ready Limited
Ever Ready House 93 Burleigh Gardens
Southgate London N14 5AQ (GB)**

(72) Inventor: **Thompson, Edward
66 Raby Road Oxclose Village Washington
Tyne & Wear NE38 0LU (GB)**

**Watson, Ronald Frame
19 Linden Way Darras Hall Ponteland
Newcastle NE20 9DP (GB)**

**Hill, David
141 Wansbeck Road Jarrow
Tyne & Wear NE32 5SR (GB)**

(74) Representative: **Lewis, Samuel Hewitt et al
FORRESTER & BOEHMERT Widenmayerstrasse 4/I
D-8000 München 22 (DE)**

(54) **Cell and method of assembling same.**

(57) A primary cell has a container comprising a metal can (18) closed by a plastics disc (16) through which a current collector (17) extends. If the pressure inside the container rises to an excessive value, the plastics disc is deformed and the electrical circuit through the cell is opened.

EP 0 327 366 A2

Bundesdruckerei Berlin

# Description

## Cell and method of assembling same

The present invention relates to a primary cell comprising a container containing at least one electrochemically active composition and current conducting means, which may include the container, providing a path for conducting electrical current through the cell. It is generally desirable for the container to be closed during manufacture of the cell and to remain closed during use of the cell. This avoids ingress of foreign matter to the container, which may interfere with proper operation of the cell, and avoids escape from the cell of material which may be harmful to persons or to equipment. It has been recognised that a permanently closed cell is potentially dangerous, because of the possibility of the generation of gas within the container. If the container is not vented, the pressure inside the container might increase to a value at which the cell is potentially dangerous.

One known solution to the problem of preventing escape of material from a primary cell during normal use, while avoiding risk of establishment of a dangerous pressure inside the container of the cell, is the provision of an opening from the interior of the container and closing of that opening by a seal which will yield under a moderate pressure within the container to vent the interior of the container to the ambient atmosphere. Although adoption of this solution can eliminate the risk of materials being expelled from the cell during normal use, it does not solve the problem of preventing the expulsion of materials from the cell in unusual circumstances, for example the application of reversed polarity to the cell and consequent conduction of current through the cell in a direction which is opposite to the normal direction of current flow during discharge of the cell. This can happen when a number of cells are arranged in series in apparatus and one of these cells is inadvertently placed the wrong way round.

According to the present invention, there is provided a primary cell having a container with a first wall portion which is deformed or is displaced more easily by internal pressure than is a second wall portion of the container and current conducting means providing a path of the flow of electrical current through the cell, wherein the current conducting means includes an element which is so associated mechanically with the first wall portion of the container that movement of the first wall portion relative to the second wall portion under the action of pressure within the container interrupts said path.

In the event of the pressure in a cell in accordance with the invention rising to an excessive level, the first wall portion of the container moves preferentially and this movement is used to open the electrically conductive path through the cell and thereby interrupt flow of current through the cell. This should prevent further increase in the pressure within the container. The container, or at least the first wall portion thereof, may provide a part of the electrically conductive path through the cell.

In a case where said first wall portion is a part of the current conducting means, the arrangement may be such that pressure within the cell causes movement of the first wall portion out of engagement with said element. Said element may be fixed to the second wall portion.

Alternatively, the element may be moved relative to the second wall portion by the action of pressure inside the container on the first wall portion.

In a further alternative arrangement in accordance with the invention, the first wall portion is excluded from the electrically conductive path through the cell and acts on said element to move the element relative to a further electrically conductive component and so open the path.

A well known container for a primary cell includes a metal can having a side wall and an end wall which is integral with the side wall and which closes the container at one end thereof. The known container further comprises a separately formed closure for closing the opposite end of the can against egress from the can of the electro-chemically active composition. Typically, the can is formed of relatively thin metal, for example having a thickness of less than one millimetre, and the closure is much thicker, for example having an overall thickness in excess of one millimetre. The arrangement of a cell having this kind of container and which embodies the present invention is preferably such that the position where the electrical circuit is opened lies generally within the closure.

It will be understood that, in order to ensure reliable opening of the circuit, provision has to be made for substantial movement of electrically conductive components away from each other. Furthermore, it is desirable that this movement should not increase the overall length of the cell. If opening of the circuit is dependent upon an increase in the overall dimensions of the cell, external constraints imposed on the cell may prevent opening of the circuit and thus lead to a dangerous build-up of pressure. It is also desirable to avoid providing inside the cell a space specifically to accommodate the movement of an electrically conductive component which moves to open the circuit. Such an arrangement would reduce the volume of the space inside the cell which is available to accommodate the electro-chemically active composition and thereby reduce the amount of electrical energy which is available from the cell. By accommodating within the relatively thick close the movement of the electrically conductive component which is necessary to open the circuit, the space available within the cell to accommodate the electro-chemically active composition is not significantly reduced by the provision of means for opening the electrical circuit.

In the preferred structure, the current conducting means further includes an electrical conductor which is fixed with respect to the second wall portion and which is engaged by said element when the circuit through the cell is closed, the element moving out of engagement with the conductor to open the circuit when the first wall portion moves under the action of pressure inside the first component. The electrical conductor preferably has an edge with which the element is engaged when the circuit is closed. This edge may be at the periphery of a hole formed in the electrical conductor.

In a case where the element is engaged with the electrical conductor at the edge of a hole in the conductor, the thickness of the conductor at the edge of the hole preferably exceeds the corresponding dimension of the element at the edge of the hole, the element being spaced from a face of the conductor which is presented towards the inside of the cell so that the element can move in a direction away from the interior of the cell without passing this face of the conductor. This arrangement avoids the possibility of the required movement of the element being prevented by engagement of the element with the face of the conductor which is presented towards the inside of the cell.

In the preferred cell, the first wall portion includes a weaker region at which the wall portion is adapted to rupture under pressure from within the cell, the first wall portion being arranged to open the electrical circuit through the cell when said pressure is at a level substantially below that pressure which causes rupturing of the first wall portion.

According to a second aspect of the invention, there is provided a method of assembling a cell according to the first aspect which includes an electrical conductor engaged by said element when the circuit is closed, wherein said element and the electrical conductor are formed to be an interference fit with each other and wherein, during assembly of the element with the conductor, one of said components shears material from the other component to establish a mutually interfitting relation.

There is also provided in accordance with the invention a method of assembling an electrical cell and of subsequently interrupting the flow of electrical current through the cell when the cell is assembled by a method according to the second aspect of the invention, during assembly, one of said element and said conductor is forced into a hole in the other to establish the mutually interfitting relation, wherein a wall portion of the cell is subsequently moved by an increase in pressure inside the cell after assembly and wherein the movement of the wall portion is applied to said one of the element and the conductor to force it out of the hole and thereby open the electrical circuit through the cell.

Two examples of cells embodying the invention will now be described, with reference to the accompanying drawings, wherein:

Figure 1 is a diagrammatic representation of a part of a cross-section through a first cell,

FIGURE 2 shows a part of a cross-section through a second cell in a condition for use; and

FIGURE 3 is an illustration corresponding to Figure 2 but showing the cell after the circuit thereof has been opened.

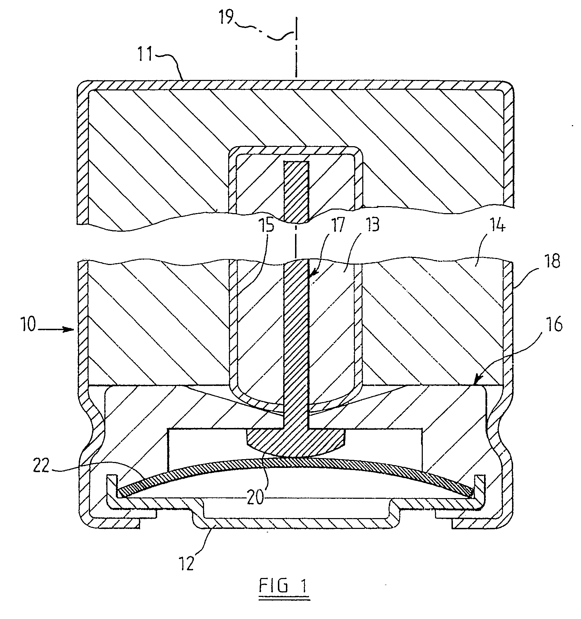

The cell illustrated in Figure 1 comprises a container 10 which is of generally cylindrical form and which has at one of its ends an upper contact element 11 and its opposite end a lower contact element 12. These contact elements are formed of electrically conductive material and, when the cell is installed in equipment for use, make electrical contact with circuit components of the equipment. During use of the cell, electrical current is conducted through the cell between the elements 11 and 12.

Electro-chemically active compositions 13 and 14 are contained in the container 10 and are separated from each other by a separator 15, which is also of cylindrical form. The separator and the compositions 13 and 14 may be as used in known cells, for example cells known as manganese-alkaline cells.

A lower end portion of the container 10 comprises a disc 16 defining a central aperture through which a current collector 17 extends. The disc 16 is impermeable to the contents of the container and forms a plug closing the lower end of the container. The disc is a sufficiently close fit on the collector 17 to prevent escape of material from the container at the interface between the collector and the disc. The disc is formed of a resiliently deformable material, for example a thermoplastics material.

The sides of the container and the end portion of the container remote from the disc 16 are formed of metal and may be integral one with the other. The metal part engages the disc 16 at the periphery of the disc in a fluid-tight manner so that the container is closed against egress or ingress of matter, even gaseous matter. During assembly of the components of the cell, the metal part 18 of the container is deformed in a known manner to grip the disc 16 and the retain the lower contact element 12 in the assembled cell. It will be noted that the metal part 18 of the container is electrically insulated from the lower contact element 12.

The electrical conductor 22 is interposed between the current collector 17 and the contact element 12 to conduct electrical current between those components when the cell is in use. The particular form of conductor illustrated in Figure 1 is that of a disc-spring having a concave surface presented towards the contact element 12 and a convex surface bearing on a head 20 of the current collector. The disc spring bears at its periphery on the contact element 12. The contact element is of dished form and has a central recess facing towards the disc spring.

The disc 16 is adapted by its shape and/or by the material of which it is formed, to deform more easily under elevated pressure in the container 10 than is the metal part 18 of the container. In the event of pressure within the container rising to an unacceptable value, that portion of the disc 16 which lies near to the collector 17 is displaced outwardly of the container relative to the metal part 18. However, movement of the entire disc outwardly of the container is prevented by the lower contact element 12 and the metal part 18 of the container.

That portion of the disc 16 which lies near to the collector 17 bears against the head 20 of the collector. If the pressure inside the container 10 rises, the disc 16 is deformed and drives the head 20 of the current collector along the axis 19 of the container towards the contact element 12 and the outside of the container. This causes the disc spring 22 also to be deformed towards a flat condition. The disc spring 22 has two stable configurations, namely the configuration illustrated in Figure 1 and a configuration in which a concave face of the spring is presented towards the collector 17. In the flat configuration, the disc spring is unstable. If the pressure within the container 10 rises to a value which is sufficiently high to deform the disc spring 22 beyond the flat configuration, the disc spring abruptly assumes the second stable configuration and the central portion of the disc spring is separated from the head 20 of the current collector. This opens the electrical circuit through the cell. Once the electrically conductive path through the cell between the current collector 17 and the disc spring 22 has been opened, it remains open. the cell is then of no further use and will be discarded. It will be noted that the limited deformation of the disc 16 which results in opening of the electrical circuit does not result in venting of the cell. The container remains closed.

The cell of Figure 1 may be modified by forming in the disc 16 a weaker region within which the disc will be ruptured if the pressure within the container increases considerably beyond that pressure which results in opening of the electrical circuit. The provision of weaker regions in plastics closures of electrical cells is well known and examples of configurations which are suitable for providing the weaker region can be found in the prior art.

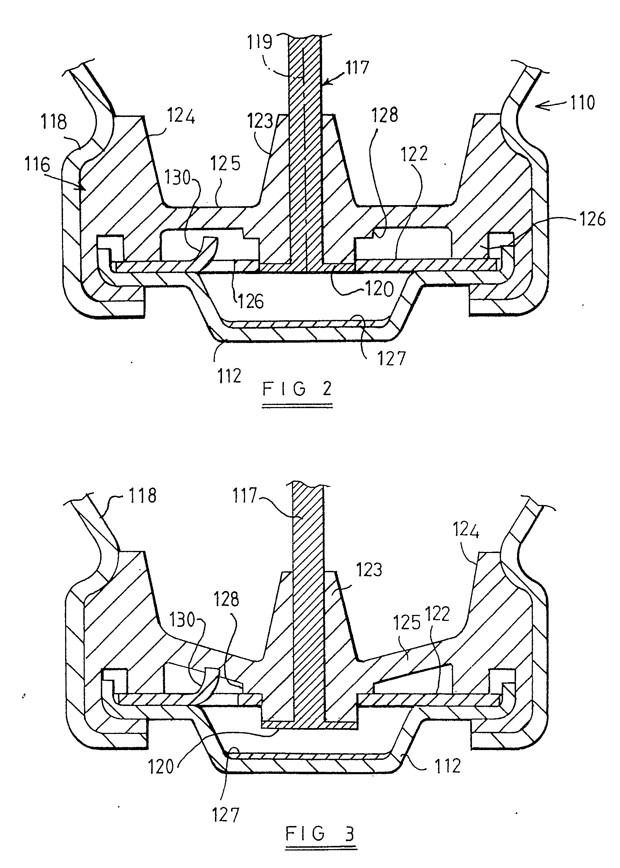

The cell of Figure 2 comprises certain parts which correspond to parts of the cell already described with reference to Figure 1. In Figure 2, such corresponding parts are identified by like reference numerals with the prefix 1 and the preceding description is deemed to apply, except for differences hereinafter mentioned.

The disc 116 of the cell shown in Figures 2 and 3 includes a relatively stiff central portion 123 which embraces the current collector 117, a relatively stiff peripheral portion 124 and a relatively easily flexible, intermediate portion 125 which extends from the central portion to the peripheral portion. The thickness of the intermediate portion, as measured in a direction along the axis 119, is small, as compared with the corresponding dimensions of the central portion 123 and the peripheral portion 124. The central portion embraces the collector 117 tightly, is fixed with respect to the collector and bears against the head 120 of the collector.

The electrical conductor 122 which is interposed between the head 120 of the collector and the contact element 112 is flat and is supported near to its periphery between an annular rib 126 on the disc 116 and a peripheral portion of the contact element 112. The head 120 engages the conductor 122 at an edge of the conductor. In the particular example illustrated, the conductor is formed with a central hole in which the head 120 is received. The current collector 117 engages the conductor 122 only at the edge of the central hole thereof. There is no engagement between the current collector and the face of the conductor 122 which is presented along the axis 119 towards the interior of the container 110.

The head 120 of the current collector is in contact with the electrical conductor 122 only at spaced positions around the periphery of the head 120. Between these positions, there is a gap between the head 120 and the conductor. In the particular example illustrated, the central hole of the conductor 122 is polygonal and the head 120 is circular. The central hole in the conductor may, for example, by hexagonal or may be square.

The thickness of the electrical conductor 122 adjacent to the central hole thereof, that is the dimension measured in a direction along the axis 119, is greater than the corresponding dimension of the head 120 of the current collector. The head 120 lies entirely within the central hole of the conductor with a surface of the head facing away from the interior of the container 110 lying in the same plane as does a corresponding surface of the conductor 122. The opposite surface of the conductor is spaced somewhat from the corresponding surface of the head 120.

The head 120 of the current collector and the electrical conductor 122 are formed of different materials, one being harder than the other, so that the harder material is capable of shearing the softer material during assembly. In the example illustrated, the head 120 is formed of brass and the conductor 122 is formed of nickel-plated steel. The head 120 is initially formed with a diameter slightly greater than the distance between opposite boundaries of the central hole of the conductor. During assembly of the components of the cell with one another, the head 120 is pushed into the central hole of the conductor from the side thereof which faces towards the interior of the container 110. The edge of the hole in the steel conductor shears material from the head 120 where there is interference between these components. In this way, a good fit is established at those positions where the head 120 engages the edge of the hole and good electrical conductivity is established. The head 120 is forced completely into the hole in the conductor until the relationship illustrated in Figure 2 is established.

In the pressure inside the container 110 rises to an excessive value, the intermediate portion 125 of the disc 116 is deformed. The central portion 123 of the disc and the current collector 117 are moved in a direction along the axis 119 towards the contact element 112. Such movement is opposed by the stiffness of the intermediate portion 125 and by friction between the head 120 and the electrical conductor 122. This friction arises only at the spaced positions where the head 120 engages the edge of the central hole in the conductor 122. This engagement extends over only a minor proportion of the periphery of the hole so that the friction is low, as compared with the friction which would exist if contact between the head 120 and the conductor 122 was continuous around the periphery of the hole.

The electrical conductor 122 is held in a fixed position relative to the metal part 118 of the container and the peripheral portion 124 of the disc 116. Accordingly, when the intermediate portion 125 of the disc is deformed, the head 120 is pushed through the hole in the conductor 122 to the position illustrated in Figure 3, where the head is spaced from the conductor and the hole in the conductor is occupied by the electrically insulating central portion 123 of the disc 116. Thus the electrical circuit through the cell is opened.

The intermediate portion 125 of the disc 116 has abutments spaced from one another around the axis 119 and facing towards the electrical conductor 122. When the head 120 is forced from the central hole of the conductor, the abutments 128 come into contact with the conductor and limit travel of the central portion 123 of the disc and of the current collector 117 so that the head 120 is prevented from reaching the contact element 112. If required, the central portion of this contact element may be provided with an electrically insulating lining 127 to ensure that the circuit through the cell will not be closed again by excessive movement of the current collector.

In a case where the disc 116 is formed with a weaker region which will rupture upon attainment inside the container 110 of a pressure which is greater than the pressure required to open the electrical circuit through the cell, the weaker region is preferably formed in the intermediate portion 125 of the disc. This may be achieved by forming in the intermediate portion a groove which extends along a chord of the disc.

Typically, the electrical circuit is opened when the pressure inside the container rises to a value within the range 3 to 7. $10^6 N/M^2$ and an increase in the pressure with the range 3 to 7. $10^6 N/M^2$ causes the disc to rupture and vent the cell.

In addition to, or in place of a weaker region in the intermediate portion 125 of the disc, which will rupture if the pressure inside the cell rises considerably above the pressure at which the electrical circuit is opened, there may be provided means for piercing the disc 116 to vent the cell, if the pressure continues to rise after the electrical circuit has been opened or rises subsequent to opening of the electrical circuit. In the example illustrated, the means for piercing the disc is a spike 130 which has a triangular shape and which is pressed out of the electrical conductor 122. The apex of the spike, which has a sharp point, is directed towards the intermediate portion 125 of the disc but is spaced slightly from the intermediate portion, when the cell is in normal use. When the pressure rises within the cell sufficiently to interrupt the electrical circuit, the spike 130 is brought into contact with the intermediate portion 125 of the disc. A further increase in pressure will eventually cause the spike to pierce completely through the intermediate portion and vent the cell.

In both of the cells illustrated, the disc which has the primary function of serving as a plug to close an end of the container surrounds the position where the electrical circuit opens. The movement of an electrically conductive component of the cell which is necessary to open the circuit is less than the overall thickness of the disc, that is the dimension measured along the axis 119. Furthermore, this movement take place within the overall thickness of the disc. Accordingly, it is not necessary to sacrifice space within the container which would otherwise be available for electro-chemically active constituents of the cell to accommodate the necessary movement of an electrically conductive component for opening of the electrical circuit. Particularly in the example of Figures 2 and 3, the overall thickness of the disc 116 exceeds the distance through which the current collector 117 must move, in order to open the electrical circuit through the cell.

The discs 16 and 116 may be formed of polypropylene by moulding. Other plastics materials, for example polyethylene, nylons and PVC may be used. Whilst the discs are conveniently formed of a single material, it would be within the scope of the invention to provide a composite disc, for example a disc formed partly of a thermoplastics material and partly of an elastomer.

## Claims

1. A primary cell having a container (10,110) with a first wall portion (16,116) which is deformed or displaced more easily by internal pressure than is a second wall portion (18,118) of the container and current-conducting means for providing a path for the flow of electrical current through the cell, wherein the current conducting means includes an element (22,120) so associated mechanically with the first wall portion that movement of the first wall portion relative to the second wall portion interrupts said path.

2. A cell according to Claim 1 wherein the container (10,110) comprises first and second separately formed components which incorporate the first and second wall portions respectively, the second component is hollow and contains electro-chemically active constituents (13,14) of the cell and wherein the first component is a plug (16,116) arranged to close the second component against egress from the second component of said constituents and to surround the position where the electrically conductive path is interrupted in consequence of movement of the first wall portion.

3. A cell according to Claim 2 wherein the thickness of the plug (16,116), measured in the direction of said movement, exceeds the distance through which the first wall portion must move, in order to interrupt the path.

4. A cell according to Claim 3 wherein the central portion (123) of the plug has a surface which faces away from the interior of the second component and is engaged with said element (120) to force the element away from the interior of the second component when the central portion is moved in that direction by pressure inside the second component.

5. A cell according to any preceding Claim wherein the current conducting means further includes an electrical conductor (122) which is fixed with respect to the second wall portion, the conductor has an edge, when the circuit through the cell is closed, said element (120) is engaged with the edge of the conductor and wherein, when the circuit is open by movement of the first wall portion, said element moves out of engagement with the conductor.

6. A cell according to Claim 5 wherein there is a hole through the conductor (122) and said element (120) partly occupies the hole and engages with the conductor only at an edge of the hole.

7. A cell according to Claim 6 where the hole is polygonal, said element (120) engages the conductor (122) at spaced positions around the edge of the hole and there is a gap between the edge of the hole and the element at other positions.

8. A cell according to any preceding Claim wherein the first wall portion has abutment (128) means for limiting movement of the first wall portion relative to the second wall portion.

9. A cell according to any one of Claims 1, 2, 3 and 4 wherein the mechanical components of the cell have two stable configurations, in one of which the path is closed and in the other of which the path is open.

10. A method of assembling a cell according to Claim 5 wherein said element (120) and the electrical conductor (122) are formed to be an interference fit with each other and wherein, during assembly of the element with the conductor, one of said components shears material from the other component to establish a mutually interfitting relation.

FIG 1

FIG 2

FIG 3